Europäisches Patentamt

European Patent Office

Office européen des brevets

(11) Publication number: **0 239 979 B1**

# EUROPEAN PATENT SPECIFICATION

(45) Date of publication of patent specification: **01.06.94**　(51) Int. Cl.⁵: **G06F 13/14**

(21) Application number: **87104706.4**

(22) Date of filing: **31.03.87**

(54) Priority order determination apparatus.

(30) Priority: **31.03.86 JP 73499/86**

(43) Date of publication of application:
**07.10.87 Bulletin 87/41**

(45) Publication of the grant of the patent:
**01.06.94 Bulletin 94/22**

(84) Designated Contracting States:
**DE FR GB**

(56) References cited:
**EP-A- 0 039 635**
**GB-A- 2 060 229**

**IBM TECHNICAL DISCLOSURE BULLETIN, vol. 27, no. 10B, March 1985, pages 5978-5981, New York, US; "Prom programmable bus arbitrator"**

**IBM TECHNICAL DISCLOSURE BULLETIN, vol. 18, no. 4, September 1975, page 1131, New York, US; J.L. DELLHEIM et al.: "Polling method using subgroups of polled stations"**

(73) Proprietor: **KABUSHIKI KAISHA TOSHIBA**
**72, Horikawa-cho**
**Saiwai-ku**
**Kawasaki-shi Kanagawa-ken 210(JP)**

Proprietor: **TOSHIBA MICRO-ELECTRONICS CORPORATION**
**25-1, Ekimae-Hon-Cho**
**Kawasaki-Ku**
**Kawasaki-Shi(JP)**

(72) Inventor: **Takahashi, Tatsuya**
**205, Burugado, Ichigao, 1152-7**
**Ichigao-cho**
**Midori-ku Yokohama-shi Kanagawa-ken(JP)**

(74) Representative: **Lehn, Werner, Dipl.-Ing. et al**
**Hoffmann, Eitle & Partner,**
**Patentanwälte,**
**Postfach 81 04 20**
**D-81904 München (DE)**

**Description**

This invention relates to a priority order determination apparatus for determining which processing should be preferentially executed among a plurality of request signals.

From the literature IBM Technical Disclosure Bulletin, Vol. 27, No. 10 B, March 19, pages 5978-5981, a PROM programmable bus arbitrator and a priority order determination method are disclosed, which method comprises a first step of receiving a plurality of request signal groups, at least one of said groups including a plurality of request signals, to compare request signals belonging to the same request signal group with each other on the basis of a first priority determination system using a round robin priority scheme, respectively, thus to determine first priority request signals of higher priority order; and a second step of comparing said first priority request signals of higher priority order with each other on the basis of a second priority determination system using a round robin priority scheme, thus to determine at least one of second priority request signals of still higher priority order.

Conventional priority order determination systems are roughly classified into the fixed priority order determination system and the equal opportunity priority order determination system.

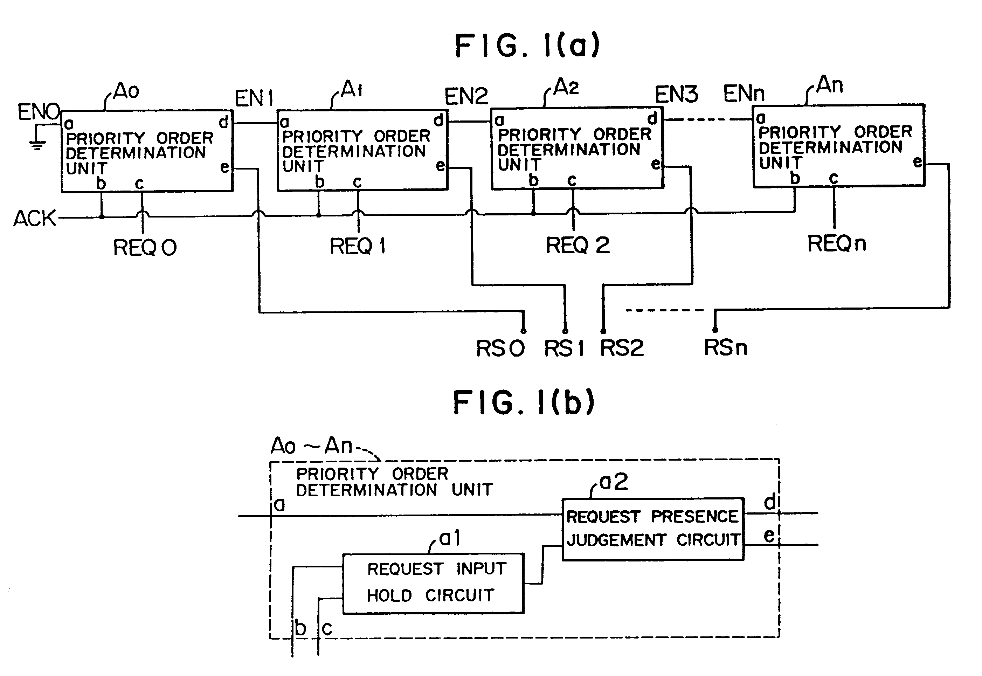

A priority order determination circuitry of the fixed priority order determination system is shown in Fig. 1. For request signals REQ0 to REQn, priority order determination units A0 to An are provided. Each unit is provided with input terminals a, b and c and output terminals d and e. These priority order determination units A0 to An are connected in series through the input terminals a and the output terminals d. An acknowledge signal ACK is input to each input terminal b. Moreover, request signals REQ0 to REQn are input to the input terminals c, respectively. From the output terminals e, request select signals RS0 to RSn are indicating whether or not request signals REQ0 to REQn are selected are output, respectively.

Each of the priority order determination units A0 to An is composed of a request input hold circuit a1 and a request presence judgement circuit a2 as shown in Fig. 1(b). The request input hold circuit a1 inputs and holds a corresponding one of request signals REQ0 to REQn from the input terminal c in synchronism with the acknowledge signal ACK from the input terminal b to output it to the request presence judgement circuit a2. The request presence judgement circuit a2 determines whether a higher order request signal is present or not on the basis of an output signal from a higher priority order determination unit, which is input from the input terminal a, whereby when there is no higher order request signal, this circuit a2 outputs a select signal from the request input hold circuit a1 to the output terminals d and e. Where the higher order signal is selected from the input terminal a even under condition that a request signal from the request input hold circuit a1 is absent, the request presence judgement circuit a2 outputs a select signal from the output terminal d.

In the example shown in Fig. 1(a), the request signal REQ0 has the highest priority order, the priority order lowers in order of the request signals REQ1, REQ2, ..., and the request signal REQn has the lowest priority order. Accordingly, when a plurality of request signals REQ0 to REQn are input at the same time, a request signal of a higher priority order is preferentially selected, whereby the request signal thus selected is output as a corresponding one of request select signals RS0 to RSn.

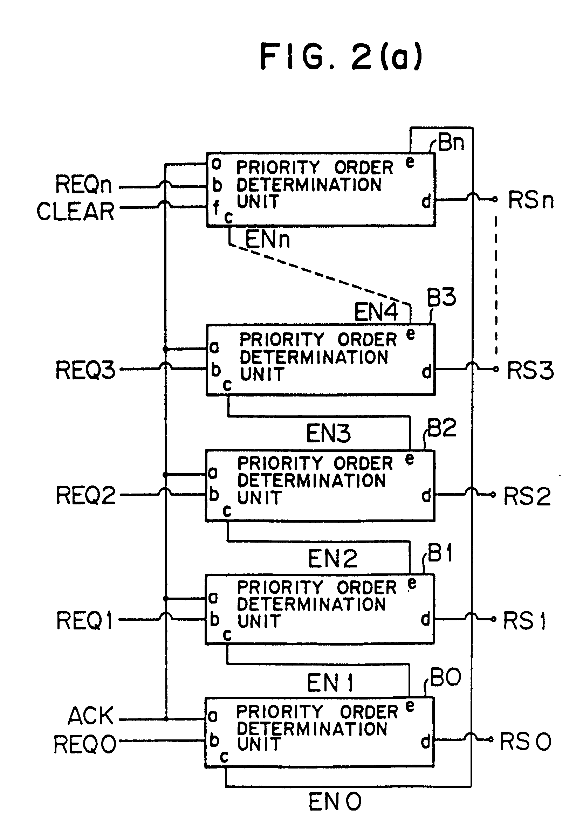

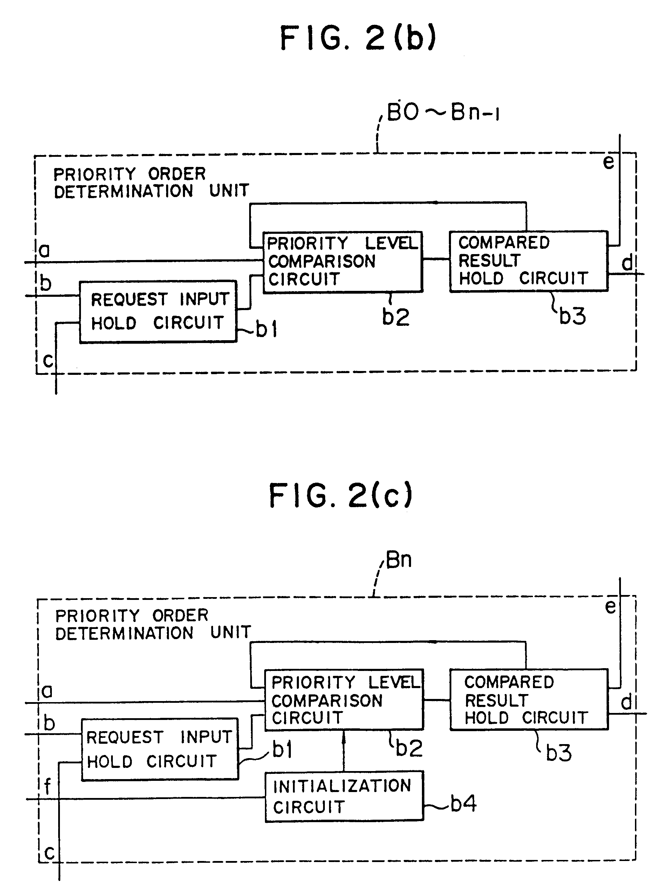

A priority order determination circuitry of the equal opportunity priority determination system is shown in Fig. 2. For request signals REQ0 to REQn, priority order determination units B0 to Bn are provided, respectively. Each unit is provided with input terminals a, b and c and output terminals d and e. These priority order determination units B0 to Bn are connected in a ring-shaped manner as shown in Fig. 2(a) through input terminals c and output terminals e. An acknowledge signal ACK is input to each input terminal a. Moreover, request signals REQ0 to REQn are input to the input terminals b, respectively. From the output terminals d, request select signals RS0 to RSn are output, respectively.

Each of the priority order determination units B0 to Bn includes a request input hold circuit b1, a priority level comparison circuit b2, and a comparison result hold circuit b3 as shown in Fig. 2(b), 2(c). The request input hold circuit b1 inputs and holds a corresponding one of request signals REQ0 to REQn from the input terminal b in accordance with a corresponding one of enable signals EN0 to ENn from the input terminal c to output it to the priority level comparison circuit b2. The priority level comparison circuit b2 compares the request signal from the request input hold circuit b1 with a signal from the compared result hold circuit b3 in synchronism with an acknowledge signal ACK to output a compared result to the compared result hold circuit b3. The compared result hold circuit b3 holds the compared result to output it from the output terminal d as a corresponding one of request select signals RS0 to RSn and from the output terminal e as a corresponding one of enable signals EN0 to ENn. The priority order determination unit Bn further comprises an initialization circuit b4. The initialization circuit b4 initially determines the priority level of the priority order determination unit Bn to be lowest by a clear signal CLEAR.

2

The request signal REQn initially has the lowest priority order, the priority order becomes higher in order of request signals REQn-1, REQn-2, ..., and the request signal REQ0 has the highest priority order. Accordingly, when a plurality of request signals REQ0 to REQn are initially input, a request signal of a higher priority order is selected. If a request signal is thus selected, then the selected request signal has the lowest priority order. The priority order will be determined in order of connection. For example, if request signal REQ2 is selected, then the request signal REQ2 has the lowest order. Thus, the priority order advances in order of request signals REQ1, REQ0, REQn, ... The request signal REQ3 has the highest priority order. By repeating such an operation, respective request signals will be equally selected.

As just described, with the conventional priority order determination circuitry, in either case that the fixed priority order determination system or the equal opportunity priority order determination system is employed, the priority order is determined always on the basis of a certain determination system. Meanwhile, where request signals are received from various kinds of equipment, it often happens that while it is required for a certain request signal to execute the processing of the highest priority, it is required for another request signal to execute the equal opportunity processing without determining the priority order. However, since it was only possible that the conventional priority order determination circuitry determined the priority order always on the basis of a single determination system alone, the conventional priority order determination circuitry could not cope with such a demand.

With the above in view, an object of the present invention is to provide a priority order determination method and an apparatus therefor which can determine the priority order on the basis of plural kinds of priority order determination systems.

The object of the present invention is achieved by a priority order determination apparatus comprising plural first priority order determination means for receiving a plurality of request signal groups, at least one of said request signal groups including a plurality of request signals, to compare request signals belonging to the same request signal groups with each other on the basis of a first priority order determination system, respectively, thus to determine first priority request signals of higher priority order; and at least one of plural second priority order determination means for comparing said first priority request signals of said respective request signal groups, which have been determined by said first priority order determination means, with each other on the basis of a second priority order determination system, thus to determine at least one of second priority request signals of still higher priority order, which is characterized in that said first priority order determination system is the equal opportunity priority determination system to always change priority orders of respective request signals so that the priority orders of said respective request signals are equalized, and said second priority order determination system is the fixed priority order determination system in which priority orders of respective request signals are fixed,wherein said first priority order determination means comprises: selection result hold means for holding a selection result of the last selected request signal; and priority level comparison means for comparing priority levels of request signals belonging to said respective signal groups with each other on the basis of said selection result, and wherein said second priority order determination means includes request presence judgement means for inputting a signal indicating presence or absence of a request signal input to said first priority order determination means of higher priority order to said priority level comparison means of said first priority order determination means of lower priority order, or which is characterized in that said first priority order determination system is the fixed priority order determination system in which priority orders of respective request signals are fixed, and said second priority order determination system is the equal opportunity determination system to always change the priority orders of respective request signals so that the priority orders of said respective request signals are equalized, wherein said first priority order determination means comprises: first priority level comparison means for comparing priority levels of said request signals with each other; and comparison result hold means for holding a comparison result by said first priority level comparison means, and wherein said second priority order determination means includes second priority comparison means for comparing priority levels of said comparison result from said first priority level comparison means with each other on the basis of the last comparison result held by said comparison result hold means.

Thus, the present invention makes it possible to determine the priority order on the basis of plural kinds of priority order determination systems. Especially, when applied to bus arbiters, interrupt controllers and direct memory access controllers, the present invention is quite effective, fast and flexible.

## BRIEF DESCRIPTION OF THE DRAWINGS

Figs. 1 and 2 are block diagrams illustrating examples of conventional priority order determination circuits, respectively;

Fig. 3 is a block diagram illustrating a first embodiment of a priority order determination apparatus according to the present invention;

Fig. 4 is a block diagram illustrating a second embodiment of a priority order determination apparatus according to the present invention;

Fig. 5 is a block diagram illustrating a third embodiment of a priority order determination apparatus according to the present invention;

Fig. 6 is a block diagram illustrating a fourth embodiment of a priority order determination apparatus according to the present invention;

Fig. 7 is a block diagram illustrating a fifth embodiment of a priority order determination apparatus according to the present invention;

Fig. 8 is a block diagram illustrating a sixth embodiment of a priority order determination apparatus according to the present invention;

Fig. 9 is a block diagram illustrating a seventh embodiment of a priority order determination apparatus according to the present invention;

Fig. 10 is a block diagram illustrating an eighth embodiment of a priority order determination apparatus according to the present invention;

Fig. 11 is a block diagram illustrating a ninth embodiment of a priority order determination apparatus according to the present invention;

Fig. 12 is a block diagram illustrating a tenth embodiment of a priority order determination apparatus according to the present invention;

Fig. 13 is a block diagram illustrating an eleventh embodiment of a priority order determination apparatus according to the present invention;

Fig. 14 is a block diagram illustrating a twelfth embodiment of a priority order determination apparatus according to the present invention;' and

Fig. 15 is a block diagram illustrating a thirteenth embodiment of a priority order determination apparatus according to the present invention.

## DETAILED DESCRIPTION OF THE INVENTION

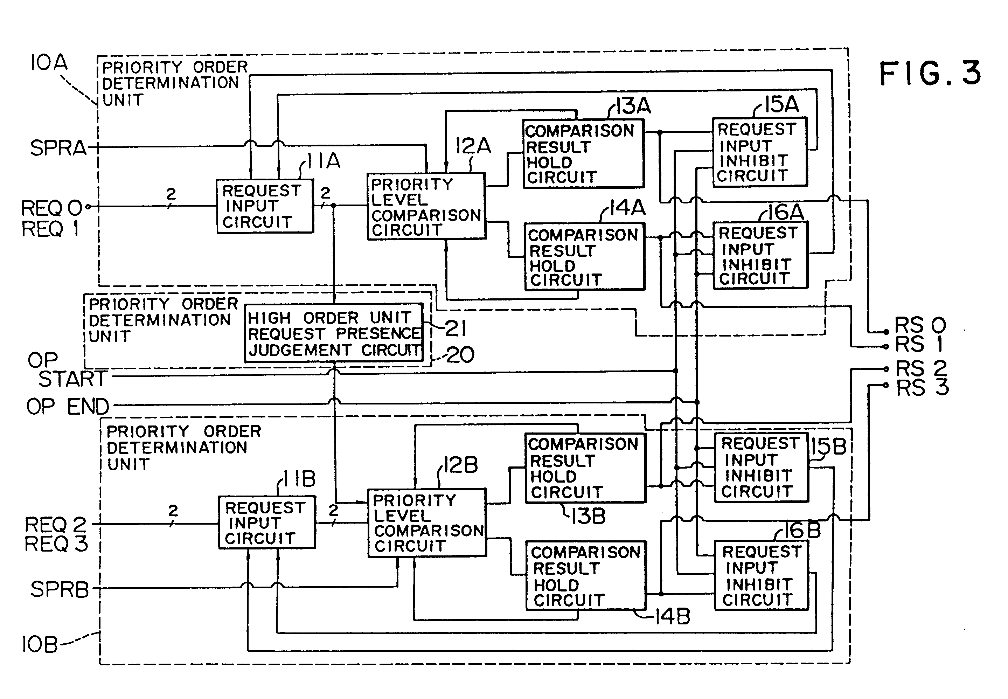

A first embodiment of a priority order determination apparatus according to the present invention is shown in Fig. 3. This priority order determination apparatus is provided with two priority order determination units 10A and 10B interconnected by a priority order determination unit 20 of a different type. The priority order determination units 10A and 10B determine the priority order in accordance with the equal opportunity priority order determination system, and the priority order determination unit 20 determines the priority order in accordance with the fixed priority order determination system.

The equal opportunity priority order determination units 10A and 10B are provided with request input circuits 11A and 11B, priority level comparison circuits 12A and 12B, comparison result hold circuits 13A and 14A, and 13B and 14B, and request input inhibit circuits 15A and 16A, and 15B and 16B, respectively.

To the request input circuits 11A and 11B, request signals REQ0 REQ1, REQ2 and REQ3 are input. In this embodiment, two request signals REQ0 and REQ1 are input to the request input circuit 11A, and two request signals REQ2 and REQ3 are input to the request input circuit 11B. The request input circuits 11A and 11B output request signals REQ0 and REQ1, and REQ2 and REQ3 if inhibit signals from the request input inhibit circuits 15A and 16A, and 15B and 16B are absent, respectively.

The priority level comparison circuit 12A of the priority order determination unit 10A compares priority levels of the input request signals REQ0 and REQ1 to output the comparison result to the comparison result hold circuits 13A and 14A for respective request signals REQ0 and REQ1. The comparison result hold circuits 13A and 14A hold comparison results, i.e., whether or not the request signals REQ0 and REQ1 are selected. These comparison results thus held are input back to the priority level comparison circuit 12A. Thus, the priority level comparison circuit 12A compares the request signals REQ0 and REQ1 with each other in consideration of the last comparison results from the comparison result hold circuits 13A and 14A to select a request signal of a higher priority order. Namely, a request signal having a comparison result indicating that it is not selected in the last comparison is preferentially selected. These newer comparison results are held by the comparison result hold circuits 13A and 14A. Next time, a request signal which has not been selected this time is preferentially selected. Thus, the priority level comparison circuit 12A has an equal opportunity to select the request signals REQ0 to REQ1.

To the priority level comparison circuit 12A, a software priority level signal SPRA is further input. This software priority level signal SPRA serves to change the priority order determination system of the priority level comparison circuit 12A. Namely, when a predetermined software priority level signal SPRA is input, although the equal opportunity priority order determination system is employed as a hardware configuration, it is possible to forcedly change it, for example, to the fixed priority order determination system in which the request signal REQ0 has always higher priority order. As just described above, the software priority level signal SPRA is used where there is a need to temporarily change the priority order determination system.

The comparison results held in the comparison result hold circuits 13A and 14A are output as request select signals RS0 and RS1, respectively, and they are input to the request input inhibit circuits 15A and 16A at the same time, respectively. To both the request input inhibit circuits 15A and 16A, an operation start signal OPSTART and an operation end signal OPEND are input. When comparison results indicating that the request signals REQ0 and REQ1 have been selected are input to the respective request input inhibit circuits 15A and 16A, these circuits 15A and 16A output inhibit signals to the request input circuit 11A during the request processing period for request signals REQ0 and REQ1. Thus, even if the request signals vary during the operation period, the request select signals RS0 and RS1 prior to the operation start are held.

A priority level comparison circuit 12B, comparison result hold circuits 13B and 14B, and request input inhibit circuits 15B and 16B provided in the priority order determination unit 10B basically have the same configuration as corresponding ones provided in the priority order determination unit 10A. The priority order determination unit 10B differs from the priority order determination unit 10A only in that a signal from a high order unit request presence judgement circuit 21 provided in the priority order determination unit 20 is input to the former. The high order unit request presence judgement circuit 21 inputs a signal from the request input circuit 11A of the priority order determination unit 10A to judge whether or not the request signal REQ0 or REQ1 is input. Where either request signal is input, the high order unit request presence judgement circuit 21 outputs a high order unit request signal to the priority level comparison circuit 12B. When this high order unit request signal is input, the priority level comparison unit 12B forcedly stops the comparative operation, even if the request signal REQ2 or REQ3 is input. Accordingly, there is employed in the priority order determination unit 20 the fixed priority order determination system where the priority orders of the request signals REQ0 and REQ1 are caused to be higher than those of the request signals REQ2 and REQ3.

The operation of the apparatus thus configured will be now described. Initially, assuming that all four request signals REQ0, REQ1, REQ2 and REQ3 are input, the operation of the priority order determination unit 10B for the request signals REQ2 and REQ3 is stopped by the priority order determination unit 20. Thus, the request signals REQ0 and REQ1 are selected by turns and are subjected to service. When inputs of the request signals REQ0 and REQ1 are stopped, the requst signals REQ2 and REQ3 are selected by turns by the priority order determination unit 10B. Then, when either of the request signals REQ0 and REQ1 is input for a second time, the operation of the priority order determination unit 10B is stopped. Thus, a request signal determined by the priority order determination unit 10A is selected.

As just described above, according to this embodiment, while request signals belonging to a certain request signal group are subjected to an equal opportunity selection, request signals belonging to another request signal group are preferentially selected. Thus, the priority order determination apparatus of this embodiment can cope with various kinds of request signals.

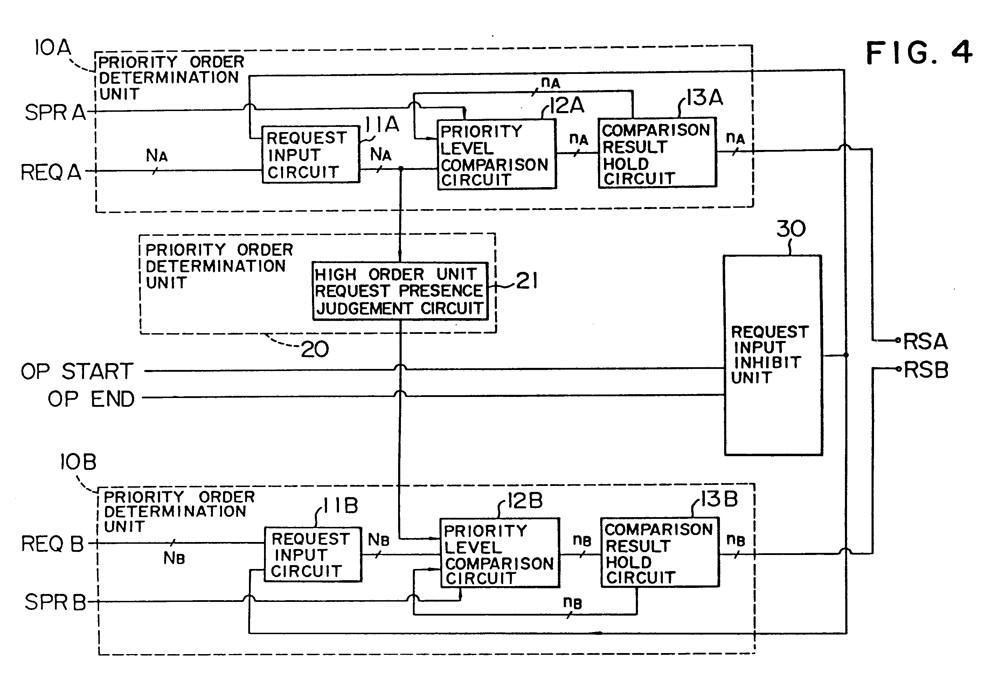

A second embodiment of a priority order determination unit according to the present invention is shown in Fig. 4. The same components as those in the first embodiment are designated by the same reference numerals, respectively, and their explanation will be omitted. This priority order determination apparatus is also provided with two priority order determination units 10A and 10B interconnected by the priority order determination unit 20 of the different type in the same manner as in the first embodiment. The priority order determination units 10A and 10B determine their priority orders in accordance with the equal opportunity priority order determination system, and the priority order determination unit 20 determines the priority order in accordance with the fixed priority order determination system.

The equal opportunity priority order determination units 10A and 10B are provided with request input circuits 11A and 11B, priority level comparison circuits 12A and 12B, and comparison result hold circuits 13A and 13B, respectively.

To the request input circuits 11A and 11B in this embodiment, $N_A$ request signal groups REQA and $N_B$ request signal groups REQB and input, respectively. The priority level comparison circuit 12A of the priority order determination unit 10A inputs an output signal of $N_A$ bits from the request input circuit 11A and a compared result signal of $n_A$ bits from the comparison result hold circuit 13A to select a request signal which has not been selected in the last comparison. Since the comparison result hold circuit 13A is configured as a unitary block to indicate a comparison result number using the number of a selected request signal, it is possible to represent a comparison result signal using the bit number $n_A$ less than the number $N_A$ of the request signal groups REQA.

5

The priority order determination unit 10B is substantially the same as that in the first embodiment except that the comparison result hold circuit 13B is configured as a unitary block to indicate a compared result signal using the bit number $n_B$ less than the number $N_B$ of the request signal groups REQB.

The priority order determination unit 20 is substantially the same as that in the first embodiment except that the number of signals from the request input circuit 11A of the priority order determination unit 10A is equal to $N_A$.

In this embodiment, the request input inhibit circuits 15A and 16A, and 15B and 16B, which have been provided in the respective priority order determination units 10A and 10B in the first embodiment, are combined into a unitary request input inhibit circuit 30. To the request input inhibit circuit 30, only the operation start signal OPSTART and the operation end signal OPEND are input. The request input inhibit circuit 30 inhibits inputs of all the request signals REQA and REQB during the operation period irrespective of presence or absence of the requests signals REQA and REQB.

In addition, an arrangement may be employed such that the request input circuits 11A and 11B are omitted and the request signal groups REQA and REQB are directly input to the priority level comparison circuits 12A and 12B. In this case, an inhibit signal is input from the request input inhibit circuit 30 to the priority level comparison circuits 12A and 12B. Thus, this arrangement allows the priority level comparison circuits 12A and 12B not to effect comparative operation in response to the inhibit signal.

As just described above, the priority order determination apparatus according to this embodiment can determine the priority order for a large number of request signals with a simplified circuit configuration.

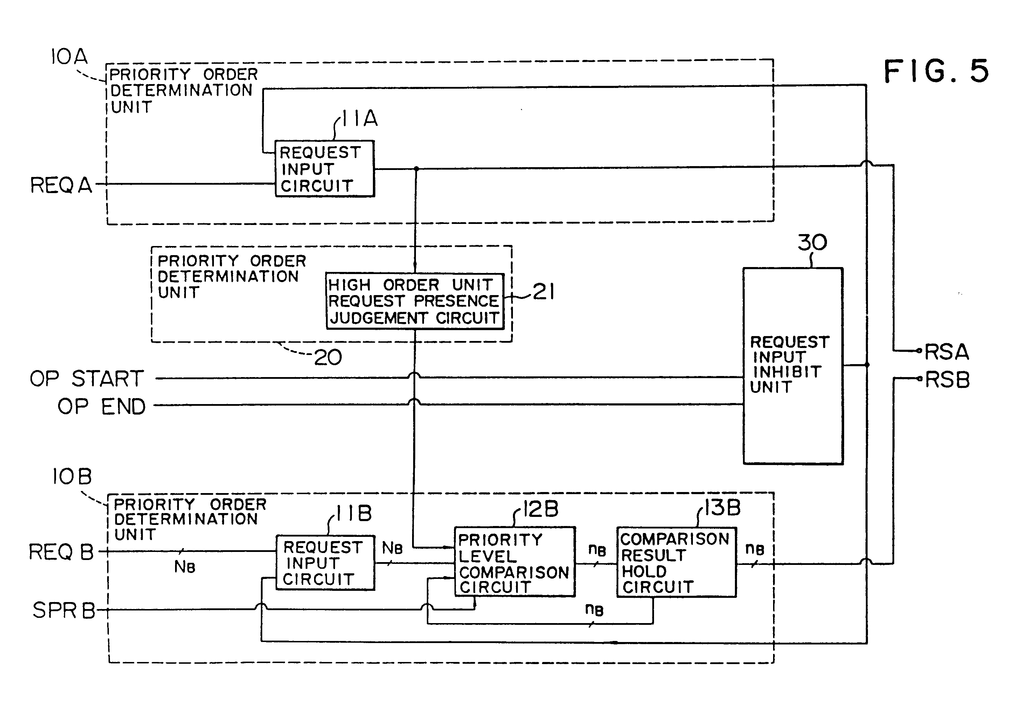

A third embodiment of a priority order determination apparatus according to the present invention is shown in Fig. 5. This embodiment is characterized in that only one request signal REQA is input to the priority order determination unit 10A of higher priority level. In this case, since there is no need to make a comparison between priority levels in the priority order determination unit 10A, the priority level comparison circuit 12A and the comparison result hold circuit 13A are not provided. An output of the request input circuit 11A is output as a request select signal RSA as it is.

In this embodiment, request signals belonging to $N_B$ request signal groups REQB are selected on the basis of the equal opportunity system, but when the request signal REQA is input, the request signal REQA is preferentially selected always.

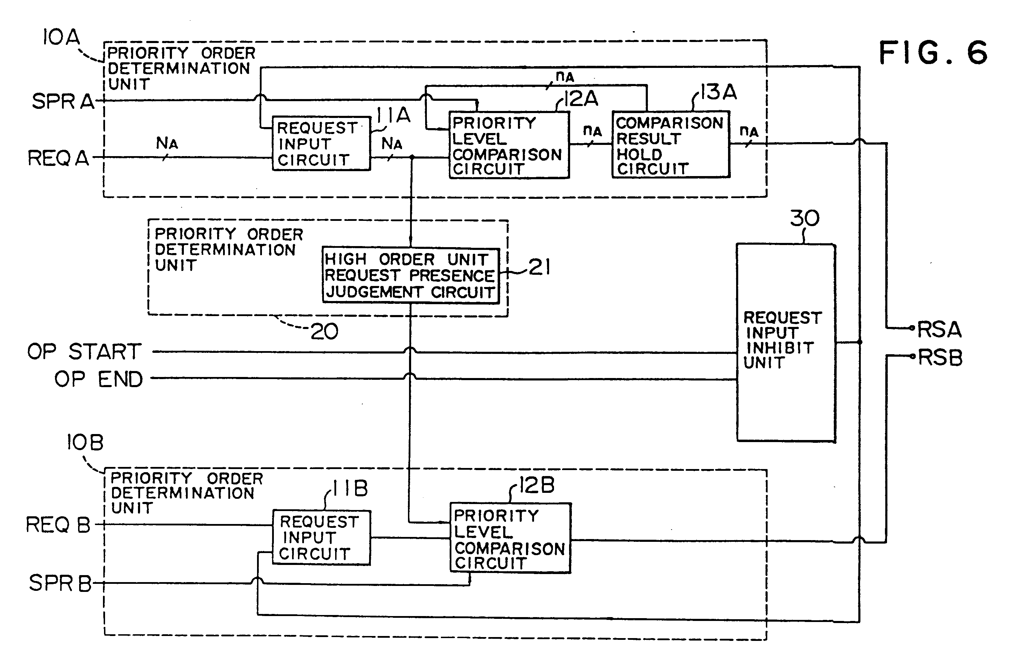

A fourth embodiment of a priority order determination unit according to the present invention is shown in Fig. 6. This embodiment is characterized in that only one request signal REQB is input to the priority order determination unit 10B. While the comparison result hold circuit 13B is unnecessary, the priority level comparison circuit 12B is necessary. This is because it is necessary to compare the request signal REQB with an output signal from the high order unit request presence judgement circuit 21 indicating presence or absence of the request signal group REQA of the higher priority order determination unit 10A since the priority order determination unit 10B has lower priority order.

In this embodiment, request signals belonging to $N_A$ request signal groups REQA are selected on the basis of the equal opportunity system, but the request signal REQB is selected only when all request signals belonging to the request signal groups REQA are not input.

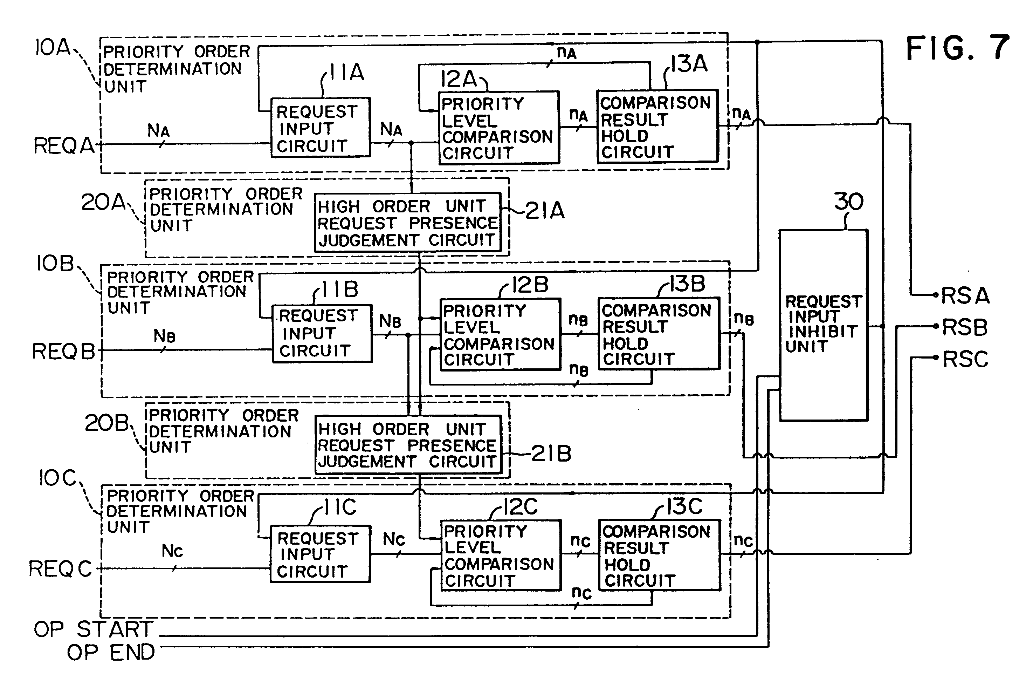

A fifth embodiment of a priority order determination apparatus is shown in Fig. 7. This priority order determination apparatus is provided with three priority order determination units 10A, 10B and 10C wherein the priority order determination units 10A and 10B are connected by a priority order determination unit 20A of a different type and the priority order determination units 10B and 10C are connected by a priority order determination unit 20B of a different type. The priority order determination units 10A, 10B and 10C determine their priority orders in accordance with the equal opportunity priority order determination system, and the priority order determination units 20A and 20B determine their priority orders in accordance with the fixed priority order determination system.

The priority order determination units 10A, 10B and 10C are provided with request input circuits 11A, 11B and 11C, priority level comparison circuits 12A, 12B and 12C, and comparison result hold circuits 13A, 13B and 13C, which are similar to those in the above-mentioned second embodiment, respectively. Moreover, the fixed priority order determination units 20A and 20B are also provided with high order unit request presence judgement circuits 21A and 21B which are similar to those in the above-mentioned second embodiment, respectively. It is determined by these priority order determination units 20A and 20B that the request signal groups REQA of the priority order determination unit 10A have the highest priority order, the request signal groups REQB of the priority order determination unit 10B have intermediate priority order, and the request signal groups REQC of the priority order determination unit 10C have the lowest priority order.

In this embodiemnt, request signals belonging to respective request signal groups REQA, REQB and REQC are selected on the basis of the equal opportunity priority order system, and request signals between

6

the request signal groups REQA and REQB, and REQB and REQC are selected on the basis of the fixed priority order system.

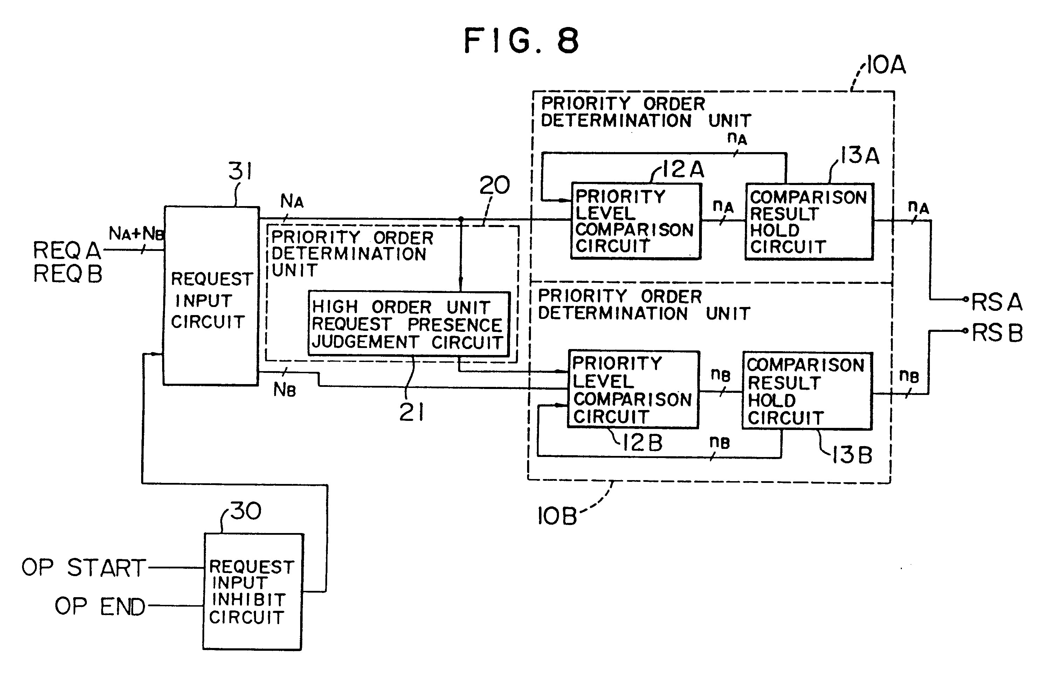

A sixth embodiment of a priority order determination apparatus according to the present invention is shown in Fig. 8. This embodiment is characterized in that the request input circuits 11A and 11B of the priority order determination units 10A and 10B provided in the second embodiment are combined into a unitary common request input circuit 31. To the common request input circuit 31, $(N_A + N_B)$ request signal groups REQA and REQB are input. The common request input circuit 31 is branched at its output side into two signal lines for respective request signal groups REQA and REQB. The priority order determination unit 20 is connected to one output signal line thus branched. Its output is input to the priority level comparison circuit 13B of the priority order determination unit 10B.

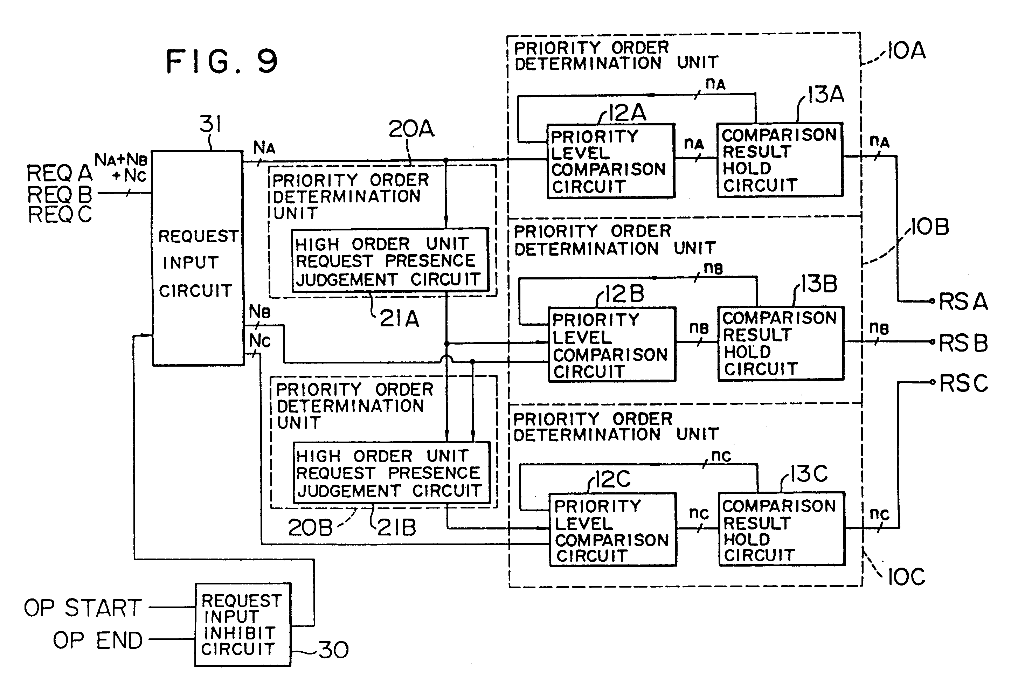

A seventh embodiment of a priority order determination apparatus according to the present invention is shown in Fig. 9. This embodiment is characterized in that the request input circuits 11A, 11B and 11C of the respective priority order determination units 10A, 10B and 10C provided in the above-mentioned fifth embodiment are combined into a unitary common request input circuit 31 in the same manner as in the sixth embodiment. To the common request input circuit 31, $(N_A + N_B + N_C)$ request signal groups REQA, REQB and RFQC are input. These request signal group REQA, REQB and REQC are output separately from each other.

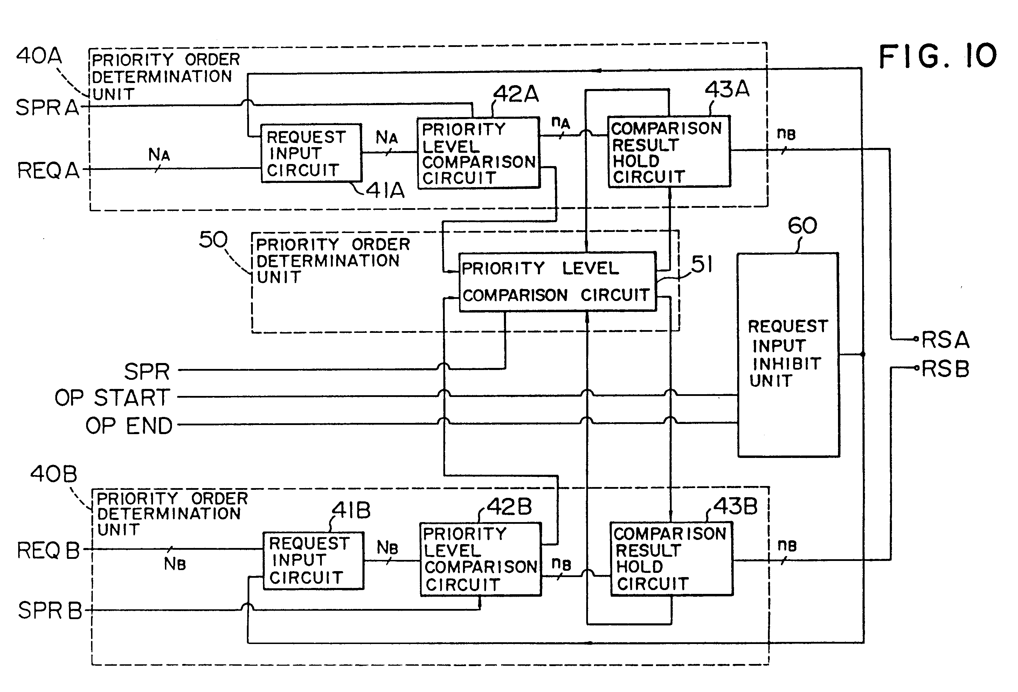

An eighth embodiment of a priority order determination apparatus according to the present invention is shown in Fig. 10. This priority order determination apparatus is provided with two priority order determination units 40A and 40B of the fixed priority order system, and a priority order determination unit 50 of the equal opportunity order determination system connecting these priority order determination units 40A and 40B.

The fixed priority determination units 40A and 40B are provided with request input circuits 41A and 41B, priority level comparison circuits 42A and 42B, and comparison result hold circuits 43A and 43B, respectively.

To the request input circuits 41A and 41B, request signal groups REQA and REQB are input, respectively. These request input circuits 41A and 41B output request signal groups REQA and REQB if an inhibit signal from a request input inhibit circuit 60 is absent.

The priority level comparator circuits 42A and 42B compare priority level of respective request signals belonging to the request signal groups REQA and REQB with each other in accordance with the fixed priority determination system, respectively. Their comparison results are output to respective comparison result hold circuits 43A and 43B.

On the other hand, signals indicating presence or absence of request are input from the priority level comparison circuits 42A and 42B to a priority level comparison circuit 51 of the priority order determination unit 50. The priority level comparison circuit 51 compares these input signals with each other in consideration of the last comparison results from the comparison result hold circuits 43A and 43B of the respective priority order determination units 40A and 40B to select a signal of higher priority level. Thus, when either signal is selected, the priority level comparison circuit 51 outputs a signal indicative of this fact to the comparison result hold circuit 43A or 43B. At this time, the comparison result hold circuit 43A or 43B holds a comparison result from the priority level comparison circuit 42A or 42B.

To the priority level comparison circuits 42A, 42B and 51, software priority level signals SPRA, SPRB and SPRC are input, respectively. Thus, the priority order or the priority order determination system can be changed using a program from the external.

The request input inhibit unit 60 is common to the priority order determination units 40A and 40B to inhibit inputs of request signal groups REQA and REQB during the operation period using an operation start signal OPSTART and an operation end signal OPEND.

The final request select signals RSA and RSB are output from the comparison result hold circuits, respectively.

The operation of the apparatus in this embodiment will be now described. When the request signal groups REQA and REQB are input, request signals of the highest priority order belonging to the request signal groups REQA and REQB are selected in the priority level comparison circuits 42A and 42B, respectively. Then, request signals belonging to the request signal group which have not been selected in the last comparison of the priority level comparison circuit 51 are selected. The signals thus selected are held in the comparison result hold circuits 43A and 43B and then are output as request select signals RSA and RSB, respectively. Accordingly, request signals between different request signal groups REQA and REQB are selected on the basis of the equal opportunity system.

As just described above, according to this embodiment, one request signal is preferentially selected in a fixed manner in the same request signal group, but request signals between different request groups are selected on the basis of the equal opportunity system. Thus, the priority order determination apparatus of this embodiment can cope with various kinds of request signals.

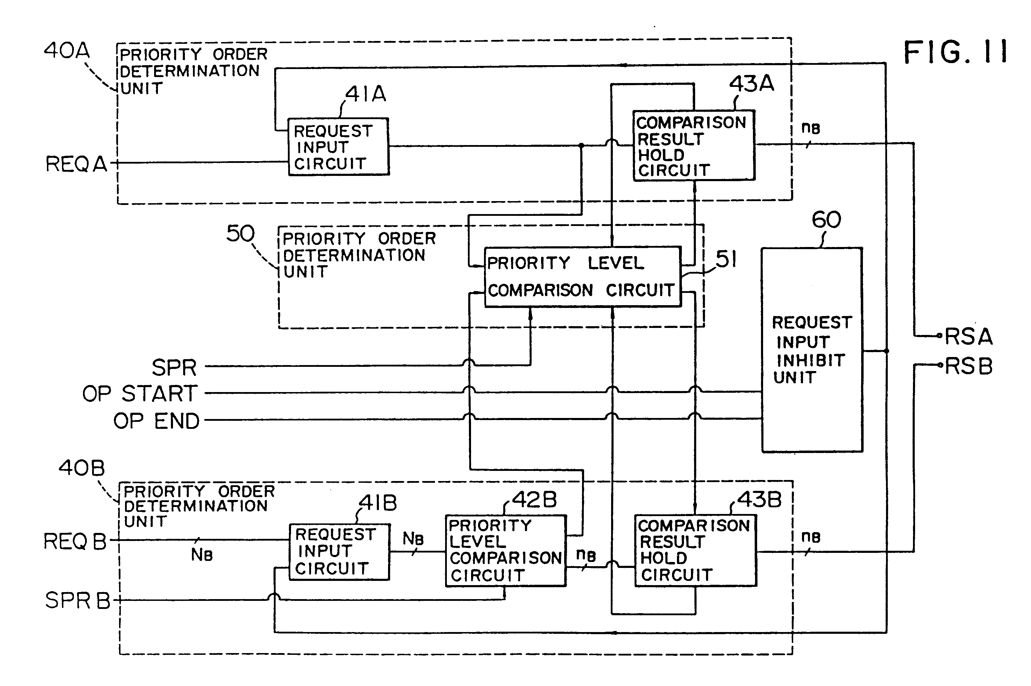

A ninth embodiment of a priority order determination apparatus according to the present invention is shown in Fig. 11. This embodiment is characterized in that only one request signal REQA is input to the priority order determination unit 40A. In this case, since the priority level comparison in the priority order determination unit 40A is not required, the priority level comparison circuit 42A is not provided. An output signal of the request input circuit 41A is output to the comparison result hold circuit 43A and the priority level comparison circuit 51 as it is.

In this embodiment, request signals belonging to $N_B$ request signal groups REQB are selected on the basis of the fixed priority order determination system, but request signals belonging to different request signal groups REQA and REQB are selected on the basis of the equal opportunity priority order determination system.

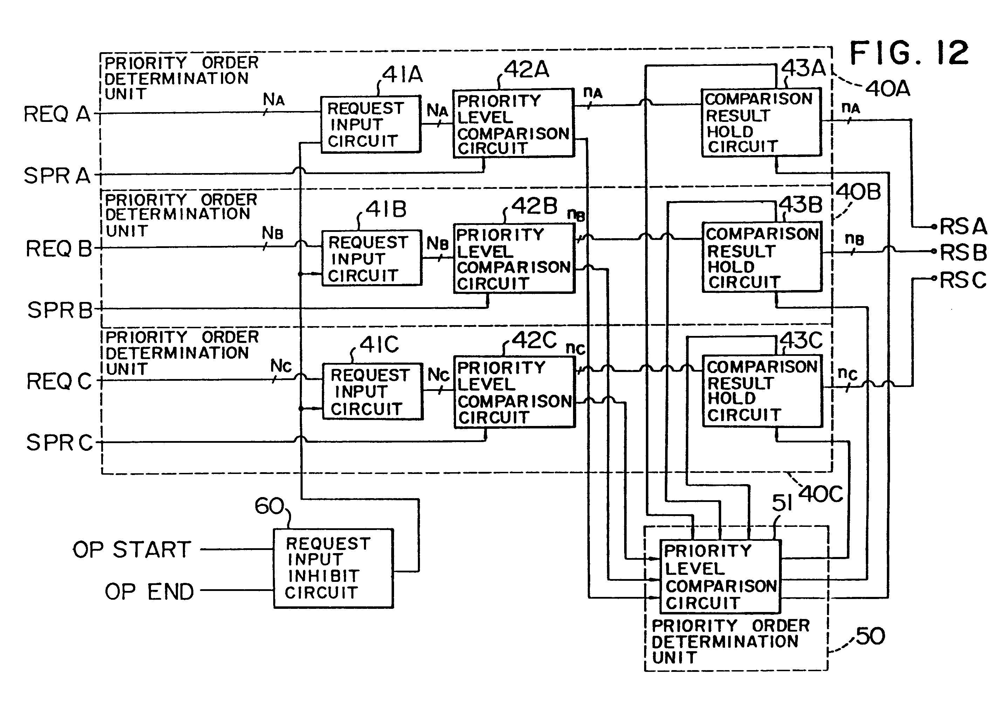

A tenth embodiment of a priority order determination apparatus according to the present invention is shown in Fig. 12. This priority order determination apparatus is provided with three priority order determination circuits 40A, 40B and 40C of the fixed priority order determination system, and a priority order determination unit 50 of the equal opportunity priority order determination system connecting these priority order determination units 40A, 40B and 40C.

The priority order determination units 40A, 40B and 40C are provided with request input circuits 41A, 41B and 41C, priority level comparison circuits 42A, 42B and 42C, and comparison result hold circuits 43A, 43B and 43C in the same manner as in the eighth embodiment, respectively.

To the priority level comparison circuit 51 of the priority order determination unit 50, signals indicating presence or absence from the priority level comparison circuits 42A, 42B and 42C are input. The priority level comparison circuit 51 compares respective signals with each other in consideration of the last comparison results from the comparison result hold circuits 43A, 43B and 43C to determine their priority orders.

In this embodiment, the priority orders of respective request signals belonging to the same request signal groups REQA, REQB and REQC are determined on the basis of the fixed priority order determination system, and request signals between the request signal groups REQA, REQB and REQC are selected on the basis of the equal opportunity priority order determination system.

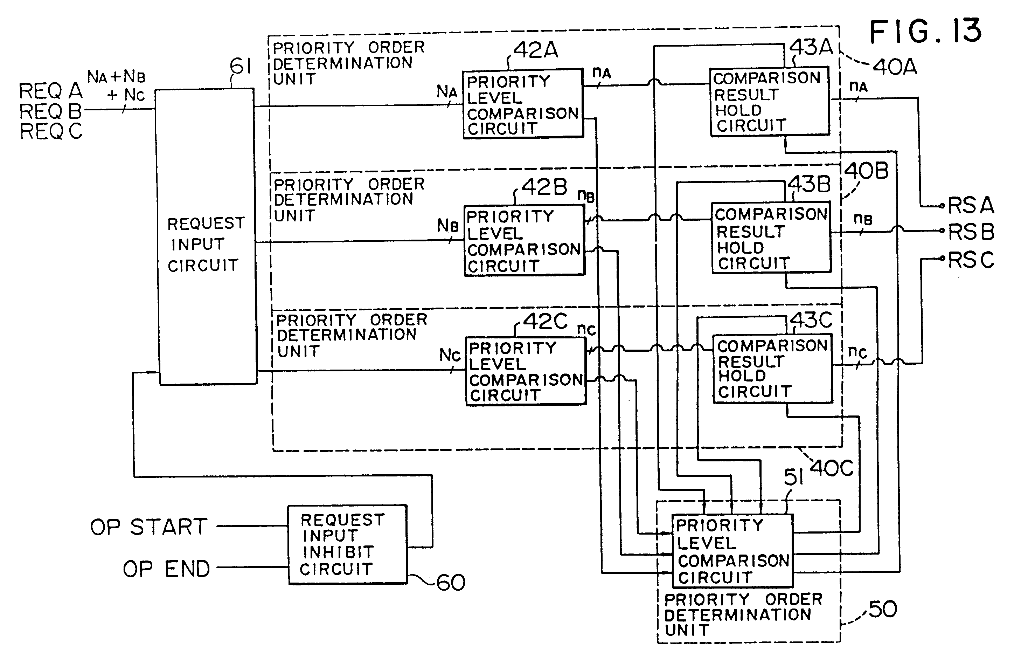

An eleventh embodiment of a priority order determination apparatus according to the present invention is shown in Fig. 13. This embodiment is characterized in that the request input circuits 41A, 41B and 41C of the respective priority order determination units 40A, 40B and 40C in the tenth embodiment are combined into a unitary common request input unit 61 in the same manner as in the seventh embodiment, and in that $(N_A + N_B + N_C)$ request signal groups REQA, REQB and REQC are input to the common request input unit 61 and they are output separately from each other.

In the above-mentioned embodiments, the equal opportunity priority order determination system and the fixed priority order determination system are combined with each other. In addition, other priority order determination systems, e.g., the changeable fixed priority order determination system in which the fixed priority orders are changeable, the round-robin priority order determination system in which the priority orders cyclically change, and the like may be employed.

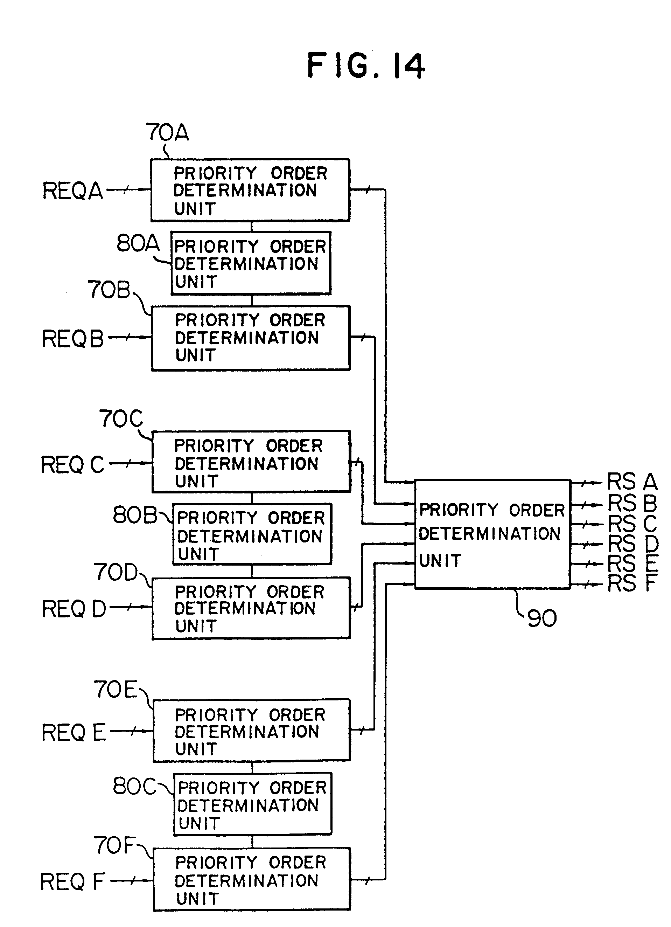

A twelfth embodiment of a priority order determination apparatus according to the present invention is shown in Fig. 14. This priority order determination apparatus is provided with priority order determination units 70A, 70B, 70C, 70D, 70E and 70F of a first kind of priority order determination system, priority order determination units 80A, 80B and 80C of a second kind of priority order determination system connected between the priority order determination units 70A and 70B, 70C and 70D, and 70E and 70F, respectively, and a priority order determination unit 90 of a third kind of priority order determination system connected to the priority order determination units 70A to 70F. The first to third kinds of priority order determination systems are selected from the equal opportunity priority order determination system, the fixed priority order determination system, and the round-robin priority order determination system. In an actual term, six combinations labeled A to F as shown in Table can be adopted.

For example, in the case of the combination A, the first kind of priority order determination system is the equal opportunity priority order determination system, the second kind of priority order determination system is the fixed priority order determination system, and the third kind of priority order determination system is the round-robin priority order determination system.

Table

| | First kind of priority order determination system | Second kind of priority order determination system | Third kind of priority order determination system |
|---|---|---|---|
| A | Equal opportunity | Fixed | Round-robin |
| B | Equal opportunity | Round-robin | Fixed |
| C | Fixed | Equal opportunity | Round-robin |
| D | Fixed | Round-robin | Equal opportunity |
| E | Round-robin | Fixed | Equal opportunity |
| F | Round-robin | Equal opportunity | Fixed |

Note:

1) 'Equal opportunity' means "Equal opportunity priority order determination system".

2) 'Fixed' means "Fixed priority order determination system".

3) 'Round-robin' means "Round-robin priority order determination system".

In Fig. 14, the details of respective priority order determination units 70A to 70F, 80A to 80C and 90 are omitted. The priority order determination units 70A to 70F have the same configuration as, for example, the priority order determination units 10A and 10B shown in Figs. 3 to 6. Moreover, the priority order determination units 80A to 80C have the same configuration as, for example, the priority order determination unit 20 shown in Figs. 3 to 6.

9

Request signal groups REQA to REQF are input to the priority order determination units 70A to 70F, respectively. These priority order determination units 70A to 70F determine request signals to be preferentially selected, i.e. priority request signals, which are included in the input request signal groups REQA to REQF on the basis of the equal opportunity priority order determination system. Then, the priority order determination units 80A to 80C determine priority request signals to be preferentially selected among the above-mentioned respective priority request signals determined by the priority order determination units 70A to 70F on the basis of the fixed priority order determination system. The priority request signals determined by these priority order determination units 80A to 80C are all input to the priority order determination unit 90. Thus, the priority order determination unit 90 determines priority levels of these priority request signals on the basis of the round-robin priority order determination system to output request select signals RSA to RSF.

For example, when the combination C is employed, the first kind of priority order determination system is the fixed priority order determination system, the second kind of priority order determination system is the equal opportunity priority border determination system, and the third kind of priority order determination system is the round-robin priority order determination system.

In the case of the above combination C, the priority order determination units 70A to 70F have the same configuration as, for example, the priority order determination units 40A and 40B shown in Figs. 10 and 11, and the priority order determination units 80A to 80C have the same configuration as the priority order determination unit 50 shown in Figs. 10 and 11.

Request signal groups REQA to REQF are input to the priority order determination units 70A to 70F, respectively. These priority order determination units 70A to 70F determine request signals to be preferentially selected, i.e. priority request signals, which are included in the input request signal groups REQA to REQF on the basis of the fixed priority order determination system. Then, the priority order determination units 80A to 80C determine priority request signals to be preferentially selected among the above-mentioned respective priority request signals determined by the priority order determination units 70A to 70F on the basis of the equal opportunity priority order determination system. All the priority request signals determined by these priority order determination units 80A to 80C are input to the priority order determination unit 90. Thus, the priority order determination unit 90 determines priority levels of these priority request signals on the basis of the round-robin priority order determination system to output request select signals RSA to RSF.

The remaining combinations B, D, E and F are similar to the above combinations A and C, and therefore their explanation will be omitted.

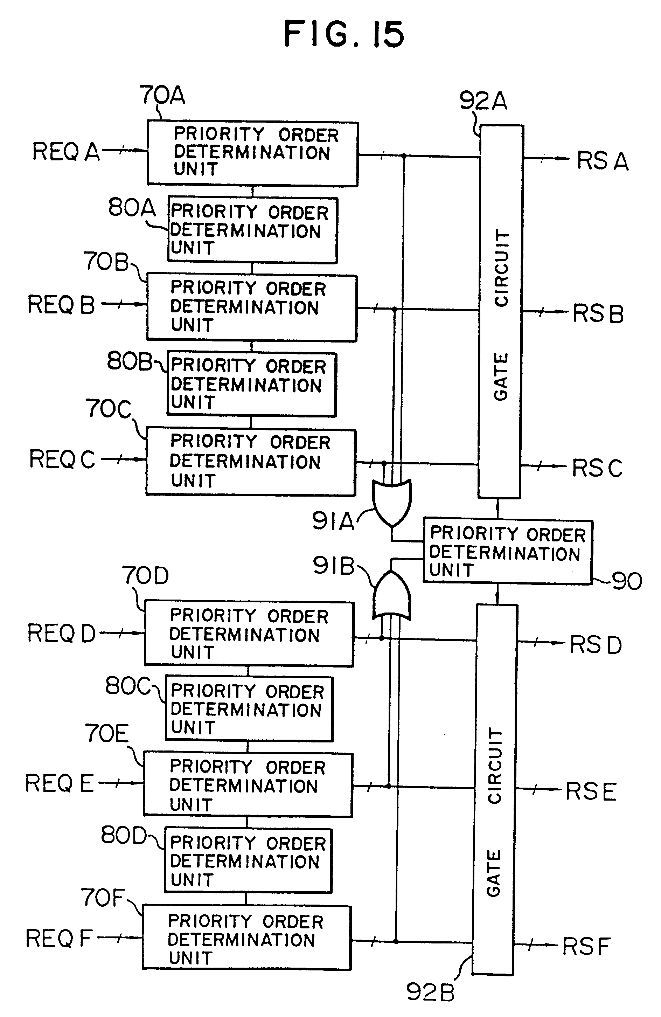

A thirteenth embodiment of a priority order determination apparatus according to the present invention is shown in Fig. 15. This priority order determination apparatus is provided with priority order determination units 70A, 70B, 70C, 70D, 70E and 70F of a first kind of priority order determination system, priority order determination units 80A, 80B, 80C and 80D of a second kind of priority order determination system connected between the priority order determination units 70A and 70B, 70B and 70C, 70D and 70E, and 70E and 70F, respectively, a priority order determination unit 90 of a third kind of priority order determination system connected to the priority order determination units 70A to 70F through OR gates 91A and 91B, and gate circuits 92A and 92B which are opened and closed in response to an output from the priority order determination unit 90. The first to third kinds of priority order determination systems are selected from the equal opportunity priority order determination system, the fixed priority order determination system, and the round-robin priority order determination system. In an actual term, six combinations labeled A to F as shown in Table can be adopted.

For example, in the case of the combination A, the first kind of priority order determination system is the equal opportunity priority order determination system, the second kind of priority order determination system is the fixed priority order determination system, and the third kind of priority order determination system is the round-robin priority order determination system.

In Fig. 15, the details of respective priority order determination units 70A to 70F, 80A to 80D and 90 are omitted. The priority order determination units 70A to 70F have the same configuration as, for example, the priority order determination units 10A and 10B shown in Figs. 7 to 9. Moreover, the priority order determination units 80A to 80D have the same configuration as, for example, the priority order determination units 20, 20A and 20B shown in Figs. 7 to 9.

Request signal groups REQA to REQF are input to the priority order determination units 70A to 70F, respectively. These priority order determination units 70A to 70F determine request signals to be preferentially selected, i.e. priority request signals, which are included in the input request signal groups REQA to REQF on the basis of the equal opportunity priority order determination system. Then, the priority order determination units 80A to 80D determine priority request signals to be preferentially selected among the above-mentioned respective priority request signals determined by the signal order determination units 70A to 70F on the basis of the fixed priority order determination system. All the priority request signals determined by these priority order determination units 80A to 80D are input to the priority order determination unit 90 through OR gates 91A and 901B. An output signal of the OR gate 91A indicates whether or not one of request signal groups REQA, REQB and REQC is selected. Likewise, an output signal of the OR gate 91B indicates whether or not one of request signal groups REQD, REQE and REQF is selected. Thus, the priority order determination unit 90 responds to output signals of the OR gates 91A and 91B to determine that either set of the request signal groups REQA, REQB and REQC or that of the request signal groups REQD, REQE and REQF should be preferentially selected on the basis of the round-robin priority order determination system. Responding to this determination result, either of the gate circuits 92A and 92B is opened. Thus, request select signals RSA to RSF are output from the gate circuits 92A and 92B.

For example, when the combination C is employed, the first kind of priority order determination system is the fixed priority order determination system, the second kind of priority order determination system is the equal opportunity priority order determination system, and the third kind of priority order determination system is the round-robin priority order determination system.

In the case of the above combination C, the priority order determination units 70A to 70F have the same configuration as, for example, the priority order determination units 40A, 40B and 40C shown in Figs. 12 and 13, and the priority order determination units 80A to 80D have the same configuration shown in Figs. 12 and 13.

Request signal groups REQA to REQF are input to the priority order determination units 70A to 70F, respectively. These priority order determination units 70A to 70F determine request signals to be preferentially selected, i.e. priority request signals, which are included in the input request signal groups REQA to REQF on the basis of the fixed priority order determination system. Then, the priority order determination units 80A to 80D determine priority request signals to be preferentially selected among the above-mentioned respective priority request signals determined by the signal order determination units 70A to 70F on the basis of the equal opportunity order determination system. All the priority request signals determined by these priority order determination units 80A to 80D are input to the priority order determination unit 90 through the OR gates 91A to 91B. An output signal of the OR gate 91A indicates whether or not one of request signal groups REQA, REQB and REQC is selected. An output signal of the OR gate 91B indicates whether or not one of request signal groups REQD, REQE and REQF is selected. The priority order determination circuit 90 responds to output signals of the OR gates 91A to 91B to determine that either set of the request signal groups REQA, REQB and REQC or that of the request signal groups REQD, REQE and REQF should be preferentially selected on the basis of the round-robin priority order determination system. Responding to the result thus determined, either of the gate circuits 92A and 92B is opened. Thus, request select signals RSA to RSF are output from the gate circuits 92A and 92B.

The remaining combinations B, D, E and F are similar to the above combinations A and C, and therefore their explanation will be omitted.

In the above-mentioned embodiments, the equal opportunity priority order determination system, the fixed priority order determination system, and the round-robin priority order determination system are combined with each other. Other priority order determination systems, e.g., the changeable fixed priority determination system in which fixed priority orders are changeable and the like may be adopted.

In addition, while three kinds of priority order determination systems are combined with each other in the above-mentioned embodiments, four kinds of priority determinations or more may be combined with each other.

**Claims**

1.  A priority order determination apparatus comprising:

    plural first priority order determination means (10A, 10B, 10C; 40A, 40B, 40C; 70A, 70B, 70C, 70D, 70E, 70F) for receiving a plurality of request signal groups, at least one of said request signal groups including a plurality of request signals, to compare request signals belonging to the same request signal groups with each other on the basis of a first priority order determination system, respectively, thus to determine first priority request signals of higher priority order; and

    at least one of plural second priority order determination means (20, 20A, 20B; 50; 80A, 80B, 80C, 80D) for comparing said first priority request signals of said respective request signal groups, which have been determined by said first priority order determination means, with each other on the basis of a second priority order determination system, thus to determine at least one of second priority request signals of still higher priority order,

characterized in that

said first priority order determination system is the equal opportunity priority determination system to always change priority orders of respective request signals so that the priority orders of said respective request signals are equalized, and said second priority order determination system is the fixed priority order determination system in which priority orders of respective request signals are fixed,

wherein said first priority order determination means comprises:

selection result hold means (13A, 13B, 13C) for holding a selection result of the last selected request signal; and

priority level comparison means (12A, 12B, 12C) for comparing priority levels of request signals belonging to said respective signal groups with each other on the basis of said selection result, and

wherein said second priority order determination means includes request presence judgement means (21, 21A, 21B) for inputting a signal indicating to said priority level comparison means of said first priority order determination means of lower priority order presence or absence of a request signal input to said first priority order determination means of higher priority order.

2. A priority order determination apparatus comprising:

plural first priority order determination means (10A, 10B, 10C; 40A, 40B, 40C; 70A, 70B, 70C, 70D, 70E, 70F) for receiving a plurality of request signal groups, at least one of said request signal groups including a plurality of request signals, to compare request signals belonging to the same request signal groups with each other on the basis of a first priority order determination system, respectively, thus to determine first priority request signals of higher priority order; and at least one of plural second priority order determination means (20, 20A, 20B; 50; 80A, 80B, 80C, 80D) for comparing said first priority request signals of said respective request signal groups, which have been determined by said first priority order determination means, with each other on the basis of a second priority order determination system, thus to determine at least one of second priority request signals of still higher priority order,

characterized in that

said first priority order determination system is the fixed priority order determination system in which priority orders of respective request signals are fixed, and said second priority order determination system is the equal opportunity determination system to always change the priority orders of respective request signals so that the priority orders of said respective request signals are equalized, wherein said first priority order determination means comprises:

first priority level comparison means (42A, 42B, 42C) for comparing priority levels of said request signals with each other; and

comparison result hold means (43A, 43B, 43C) for holding a comparison result by said first priority level comparison means, and

wherein said second priority order determination means includes second priority level comparison means (51) for comparing priority levels of said comparison result from said first priority level comparison means with each other on the basis of the last comparison result held by said comparison result hold means.

3. An apparatus as set forth in claim 1,

characterized by

third priority order determination means (90) for comparing second priority request signals, which have been determined by said second priority order determination means, with each other on the basis of a third different priority order determination system, thus to determine a highest priority request signal of highest priority order.

4. An apparatus as set forth in claim 3, wherein said third different priority order determination system is the round-robin priority order determination system in which priority orders of respective request signals are cyclically changed.

5. An apparatus as set forth in any of claims 1 to 4 which further comprises request input inhibit means (30; 60) for inhibiting inputs of request signals during a request processing period for a certain request signal.

**Patentansprüche**

1. Prioritätsordnungs-Bestimmungsvorrichtung, mit
einer Vielzahl von ersten Prioritätsordnungs-Bestimmungseinrichtungen (10A, 10B, 10C; 40A, 40B, 40C, 70A, 70B, 70C, 70D, 70E, 70F) zum Empfangen einer Vielzahl von Anforderungssignalgruppen, wobei wenigstens eine der Anforderungssignalgruppen eine Vielzahl von Anforderungssignalen einschließt, um Anforderungssignale, die zu denselben Anforderungssignalgruppen gehören, miteinander auf der Basis eines ersten Prioritätsordnungs-Bestimmungssystems jeweils zu vergleichen, um so erste Prioritätsanforderungssignale höherer Prioritätsordnung zu bestimmen; und
wenistens eine von einer Vielzahl von zweiten Prioritätsordnungs-Bestimmungseinrichtungen (20, 20A, 20B; 50; 80A, 80B, 80C, 80D) zum vergleichen der ersten Prioritätsanforderungssignale der jeweiligen Anforderungssignalgruppen, welche mittels der ersten Prioritätsordnungs-Bestimmungseinrichtungen bestimmt worden sind, miteinander auf der Basis eines zweiten Prioritätsordnungs-Bestimmungssystems, um so wenigstens eines von zweiten Prioritätsanforderungssignalen noch höherer Prioritätsordnung zu bestimmen,
dadurch **gekennzeichnet,** daß
das erste Prioritätsordnungs-Bestimmungssystem das Gleiche-Gelegenheit-Prioritätsbestimmungssystem ist, um immer Prioritätsordnungen jeweiliger Anforderungssignale zu ändern, so daß die Prioritätsordnungen der jeweiligen Anforderungssignale ausgeglichen werden, und das zweite Prioritätsordnungs-Bestimmungssystem das feste Prioritätsordnungs-Bestimmungssystem ist, in welchem Prioritätsordnungen jeweiliger Anforderungssignale fest sind,
worin die erste Prioritätsordnungs-Bestimmungseinrichtung umfaßt:
Auswahlergebnis-Halteeinrichtungen (13A, 13B, 13C) zum Halten eines Auswahlergebnisses des zuletzt ausgewählten Anforderungssignals; und
Prioritätsniveau-Vergleichseinrichtungen (12A, 12B, 12C) zum Vergleichen von Prioritätsniveaus von Anforderungssignalen, die zu den jeweiligen Signalgruppen gehören, miteinander auf der Basis des Auswahlergebnisses, und
worin die zweite Prioritätsordnungs-Bestimmungseinrichtung Einrichtungen (21, 21A, 21B) einschließt zum Beurteilen des Vorliegens einer Anforderung zum Eingeben eines Signals, welches der Prioritätsniveau-Vegleichseinrichtung der ersten Prioritätsordnungs-Bestimmungseinrichtung niedrigerer Prioritätsordnung Vorhandensein oder Abwesenheit einer Anforderungssignaleingabe an die erste Prioritätsordnungs-Bestimmungseinrichtung höherer Prioritätsordnung anzeigt.

2. Prioritätsordnungs-Bestimmungsvorrichtung, mit
einer Vielzahl von ersten Prioritätsordnungs-Bestimmungseinrichtungen (10A, 10B, 10C; 40A, 40B, 40C; 70A, 70B, 70C, 70D, 70E, 70F) zum Empfangen einer Vielzahl von Anforderungssignalgruppen, wobei wenigstens eine der Anforderungssignalgruppen eine Vielzahl von Anforderungssignalen einschließt, um Anforderungssignale, die zu denselben Anforderungssignalgruppen gehören, miteinander auf der Grundlage eines ersten Prioritätsordnungs-Bestimmungssystems jeweils zu vergleichen, um so erste Prioritätsanforderungssignale höherer Prioritätsordnung zu bestimmen; und wenigstens einer von einer Vielzahl von zweiten Prioritätsordnungs-Bestimmungseinrichtungen (20, 20A, 20B; 50; 80A, 80B, 80C, 80D) zum Vergleichen der ersten Prioritätsanforderungssignale der jeweiligen Anforderungssignalgruppen, welche durch die ersten Prioritätsordnungs-Bestimmungseinrichtungen bestimmt worden sind, miteinander auf der Basis eines zweiten Prioritätsordnungs-Bestimmungssystems, um so wenigstens eine von zweiten Prioritätsanforderungssignalen noch höherer Prioritätsordnung zu bestimmen,
dadurch **gekennzeichnet,** daß
das erste Prioritätsordnungs-Bestimmungssystem das feste Prioritätsordnungs-Bestimmungssystem ist, in welchem Prioritätsordnungen jeweiliger Anforderungssignale fest sind, und das zweite Prioritätsordnungs-Bestimmungssystem das Gleiche-Gelegenheit-Bestimmungssystem ist, um immer die Prioritätsordnungen jeweiliger Anforderungssignale zu ändern, so daß die Prioritätsordnungen der jeweiligen Anforderungssignale ausgeglichen werden, worin die erste Prioritätsordnungs-Bestimmungseinrichtung umfaßt:
erste Prioritätsniveau-Vergleichseinrichtungen (42A, 42B, 42C) zum Vergleichen von Prioritätsniveaus der Anforderungssignale miteinander; und
Vergleichsergebnis-Halteeinrichtungen (43A, 43B, 43C) zum Halten eines Vergleichsergebnisses von der ersten Prioritätsniveau-Vergleichseinrichtung, und
worin die zweite Prioritätsordnungs-Bestimmungseinrichtung zweite Prioritätsniveau-Vergleichseinrichtungen (51) zum Vergleichen von Prioritätsniveaus des Vergleichsergebnisses von der ersten Prioritätsniveau-Vergleichseinrichtung miteinander auf der Grundlage des letzten, von der Vergleichsergebnis-Halteeinrichtung gehaltenen Vergleichsergebnisses einschließt.

**3.** Vorrichtung nach Anspruch 1, gekennzeichnet durch

dritte Prioritätsordnungs-Bestimmungseinrichtungen (90) zum Vergleichen von zweiten Prioritätsanforderungssignalen, die mittels der zweiten Prioritätsordnungs-Bestimmungseinrichtungen bestimmt worden sind, miteinander auf der Grundlage eines dritten, verschiedenen Prioritätsordnungs-Bestimmungssystems, um so ein Anforderungssignal höchster Prioritätsordnung zu bestücken.

**4.** Vorrichtung nach Anspruch 3, dadurch gekennzeichnet, daß das dritte, verschiedene Prioritätsordnungs-Bestimmungssystem das Round-Robin-Prioritätsordnungs-Bestimmungssystem ist, in welchem Prioritätsordnungen jeweiliger Anforderungssignale zyklisch geändert werden.

**5.** Vorrichtung nach einem der Ansprüche 1 bis 4, gekennzeichnet durch Anforderungseingabe-Sperreinrichtungen (30; 60) zum Sperren von Eingaben von Anforderungssignalen während einer Anforderungs-Verarbeitungsdauer für ein bestimmtes Anforderungssignal.

**Revendications**

**1.** Appareil de détermination d'ordre de priorité comprenant :

plusieurs premiers moyens de détermination d'ordre de priorité (10A, 10B, 10C ; 40A, 40B, 40C ; 70A, 70B, 70C, 70D, 70E, 70F) pour recevoir une pluralité de groupes de signaux de requête, au moins l'un desdits groupes de signaux de requête incluant une pluralité de signaux de requête, pour comparer respectivement des signaux de requête appartenant aux mêmes groupes de signaux de requête les uns avec les autres sur la base d'un premier système de détermination d'ordre de priorité, et afin de déterminer ainsi des premiers signaux de requête de priorité d'un ordre de priorité supérieur ; et

au moins l'un d'une pluralité de seconds moyens de détermination d'ordre de priorité (20, 20A, 20B ; 50 ; 80A, 80B, 80C, 80D) pour comparer lesdits premiers signaux de requête de priorité desdits groupes de signaux de requête respectifs, ceux-ci ayant été déterminés par lesdits premiers moyens de détermination d'ordre de priorité, les uns avec les autres sur la base d'un second système de détermination d'ordre de priorité, afin de déterminer ainsi au moins l'un de seconds signaux de requête de priorité d'un ordre de priorité encore supérieur,

caractérisé en ce que :

ledit premier système de détermination d'ordre de priorité est le système de détermination de priorité d'égale opportunité afin de toujours changer les ordres de priorité des signaux de requête respectifs de façon à ce que les ordres de priorité desdits signaux de requête respectifs soient égaux, et ledit second système de détermination d'ordre de priorité est le système de détermination d'ordre de priorité fixe dans lequel les ordres de priorité des signaux de requête respectifs sont fixes,

dans lequel ledit premier moyen de détermination d'ordre de priorité comprend :

un moyen de blocage de résultat de sélection (13A, 13B, 13C) pour bloquer un résultat de sélection du dernier signal de requête sélectionné : et

un moyen de comparaison de niveaux de priorité (12A, 12B, 12C) pour comparer les niveaux de priorité des signaux de requête appartenant auxdits groupes de signaux respectifs les uns avec les autres sur la base dudit résultat de sélection, et

dans lequel ledit second moyen de détermination d'ordre de priorité inclut un moyen d'appréciation de présence de requête (21, 21A, 21B) pour entrer un signal qui indique audit moyen de comparaison de niveaux de priorité dudit premier moyen de détermination d'ordre de priorité d'ordre de priorité inférieur la présence ou l'absence d'un signal de requête entré dans ledit premier moyen de détermination d'ordre de priorité d'ordre de priorité supérieur.

**2.** Appareil de détermination d'ordre de priorité comprenant :

plusieurs premiers moyens de détermination d'ordre de priorité (10A, 10B, 10C ; 40A, 40B, 40C ; 70A, 70B, 70C, 70D, 70E, 70F) pour recevoir une pluralité de groupes de signaux de requête, au moins l'un desdits groupes de signaux de requête incluant une pluralité de signaux de requête, pour comparer respectivement des signaux de requête appartenant aux mêmes groupes de signaux de requête les uns avec les autres sur la base d'un premier système de détermination d'ordre de priorité, et afin de déterminer ainsi des premiers signaux de requête de priorité d'un ordre de priorité supérieur ; et

au moins l'un d'une pluralité de seconds moyens de détermination d'ordre de priorité (20, 20A, 20B ; 50 ; 80A, 80B, 80C, 80D) pour comparer lesdits premiers signaux de requête de priorité desdits groupes de signaux de requête respectifs, ceux-ci ayant été déterminés par lesdits premiers moyens de détermination d'ordre de priorité, les uns avec les autres sur la base d'un second système de détermination d'ordre de priorité, afin de déterminer ainsi au moins l'un de seconds signaux de requête de priorité d'un ordre de priorité encore supérieur,

caractérisé en ce que :

ledit premier système de détermination d'ordre de priorité est le système de détermination d'ordre de priorité fixe dans lequel les ordres de priorité des signaux de requête respectifs sont fixes, et ledit second système de détermination d'ordre de priorité est le système de détermination d'égale opportunité afin de toujours changer les ordres de priorité des signaux de requête respectifs de façon à ce que les ordres de priorité desdits signaux de requête respectifs soient rendus égaux, dans lequel ledit premier moyen de détermination d'ordre de priorité comprend :

un premier moyen de comparaison de niveaux de priorité (42A, 42B, 42C) pour comparer les niveaux de profité desdits signaux de requête les uns avec les autres ; et

un moyen de blocage de résultat de comparaison (43A, 43B, 43C) pour bloquer un résultat de comparaison provenant dudit premier moyen de comparaison de niveaux de priorité et

dans lequel ledit second moyen de détermination d'ordre de priorité inclut un second moyen de comparaison de niveaux de priorité (51) pour comparer les niveaux de priorité dudit résultat de comparaison provenant dudit premier moyen de comparaison de niveaux de priorité les uns avec les autres sur la base du dernier résultat de comparaison bioqué par ledit moyen de blocage de résultat de comparaison.

3. Appareil selon la revendication 1, caractérisé par un troisième moyen de détermination d'ordre de priorité (90) pour comparer des seconds signaux de requête de priorité, ceux-ci ayant été déterminés par ledit second moyen de détermination d'ordre de priorité, les uns avec les autres sur la base d'un troisième système de détermination d'ordre de priorité différente, afin de déterminer ainsi un signal de requête de priorité supérieure d'un ordre de priorité supérieur.

4. Appareil selon la revendication 3, dans lequel ledit troisième système de détermination d'ordre de priorité différente est le système de détermination d'ordre de priorité cyclique dans lequel les ordres de priorité des signaux de requête respectifs sont changés cycliquement.

5. Appareil selon l'une quelconque des revendications 1 à 4 comprenant en outre un moyen d'inhibition d'entrée de requête (30 ; 60) pour inhiber les entrées des signaux de requête pendant une période de traitement de requête pour un certain signal de requête.

# FIG. I(a)

# FIG. I(b)

EP 0 239 979 B1

# FIG. 2(a)

# FIG. 2(b)

# FIG. 2(c)

FIG. 3

FIG. 4

FIG. 5

EP 0 239 979 B1

FIG. 6

PRIORITY ORDER DETERMINATION UNIT — 10A

REQUEST INPUT CIRCUIT — 11A

PRIORITY LEVEL COMPARISON CIRCUIT — 12A

COMPARISON RESULT HOLD CIRCUIT — 13A

na

SPR A

REQ A

Na

PRIORITY ORDER DETERMINATION UNIT — 20

HIGH ORDER UNIT REQUEST PRESENCE JUDGEMENT CIRCUIT — 21

OP START

OP END

REQUEST INPUT INHIBIT UNIT — 30

RSA

RSB

PRIORITY ORDER DETERMINATION UNIT — 10B

REQUEST INPUT CIRCUIT — 11B

PRIORITY LEVEL COMPARISON CIRCUIT — 12B

REQ B

SPR B

22

FIG. 7

EP 0 239 979 B1

FIG. 8

REQ A, REQ B — Na+Nb

REQUEST INPUT CIRCUIT — 31

PRIORITY ORDER DETERMINATION UNIT — 20

HIGH ORDER UNIT REQUEST PRESENCE JUDGEMENT CIRCUIT — 21

PRIORITY ORDER DETERMINATION UNIT — 10A

PRIORITY LEVEL COMPARISON CIRCUIT — 12A

COMPARISON RESULT HOLD CIRCUIT — 13A

PRIORITY ORDER DETERMINATION UNIT — 10B

PRIORITY LEVEL COMPARISON CIRCUIT — 12B

COMPARISON RESULT HOLD CIRCUIT — 13B

RSA, RSB

REQUEST INPUT INHIBIT CIRCUIT — 30

OP START, OP END

# FIG. 9

REQ A
REQ B   $N_A+N_B+N_C$
REQ C

**REQUEST INPUT CIRCUIT** 31

$N_A$

**PRIORITY ORDER DETERMINATION UNIT** 20A

**HIGH ORDER UNIT REQUEST PRESENCE JUDGEMENT CIRCUIT** 21A

$N_B$
$N_C$

**PRIORITY ORDER DETERMINATION UNIT** 20B

**HIGH ORDER UNIT REQUEST PRESENCE JUDGEMENT CIRCUIT** 21B

**PRIORITY ORDER DETERMINATION UNIT** 10A

$n_A$

**PRIORITY LEVEL COMPARISON CIRCUIT** 12A   $n_A$

**COMPARISON RESULT HOLD CIRCUIT** 13A   $n_A$

**PRIORITY ORDER DETERMINATION UNIT** 10B

$n_B$

**PRIORITY LEVEL COMPARISON CIRCUIT** 12B   $n_B$

**COMPARISON RESULT HOLD CIRCUIT** 13B   $n_B$

**PRIORITY ORDER DETERMINATION UNIT**

$n_C$

**PRIORITY LEVEL COMPARISON CIRCUIT** 12C   $n_C$

**COMPARISON RESULT HOLD CIRCUIT** 13C   $n_C$

10C

RSA
RSB
RSC

OP START
OP END

**REQUEST INPUT INHIBIT CIRCUIT** 30

EP 0 239 979 B1

FIG. 10

EP 0 239 979 B1

FIG. 11

40A PRIORITY ORDER DETERMINATION UNIT

41A REQUEST INPUT CIRCUIT

43A COMPARISON RESULT HOLD CIRCUIT

$n_B$

REQA

50 PRIORITY ORDER DETERMINATION UNIT

51 PRIORITY LEVEL COMPARISON CIRCUIT

60 REQUEST INPUT INHIBIT UNIT

RSA
RSB

SPR
OP START
OP END

40B PRIORITY ORDER DETERMINATION UNIT

41B REQUEST INPUT CIRCUIT

42B PRIORITY LEVEL COMPARISON CIRCUIT

43B COMPARISON RESULT HOLD CIRCUIT

$N_B$

$n_B$

REQ B

SPR B

27

FIG. 12

EP 0 239 979 B1

FIG.13

EP 0 239 979 B1

# FIG. 14

# FIG. 15